Europäisches Patentamt

European Patent Office

Office européen des brevets

(11) Veröffentlichungsnummer: **0 379 095**

**A1**

## (12) EUROPÄISCHE PATENTANMELDUNG

(21) Anmeldenummer: **90100646.0**

(22) Anmeldetag: **12.01.90**

(51) Int. Cl.5: **H04J 3/16**

(30) Priorität: **18.01.89 EP 89100804**

(43) Veröffentlichungstag der Anmeldung:
**25.07.90 Patentblatt 90/30**

(84) Benannte Vertragsstaaten:
**AT BE CH DE DK ES FR GB GR IT LI NL SE**

(71) Anmelder: **Siemens Aktiengesellschaft**
**Wittelsbacherplatz 2**
**D-8000 München 2(DE)**

(72) Erfinder: **Pospischil, Reginhard,**
**Dr.-Ing.-Dipl.-Ing.**
**Gabriel v. Seidl Strasse 15**
**D-8032 Gräfelfing(DE)**

(54) **Synchrones Transport-Modul STM-O.**

(57) Zwischen der europäischen plesiochronen Digitalsignalhierarchie und der Synchron-Digital-Multiplex-Hierarchie fehlt ein Bindeglied, über das vier 34,368-Mbit/s-Signale in einen synchronen Transport-Modul STM-1 eingefügt werden können. Dies vermag ein synchrones Transport-Modul STM-0, das die gleiche Struktur wie das Transport-Modul STM-1 nach CCITT sowie eine Übertragungskapazität von 39,168 Mbit/s aufweist und einen virtuellen Container VC-31 mit einem H4-Signal einer Bitrate von 34,368 Mbit/s aufzunehmen vermag. Eine Variante VC-31* des virtuellen Containers, bei dem in der ersten Spalte ein 9-Byte-Pfadkopf VC-31* POH mit zusätzlichen Bytes Z3, Z4 und Z5 vorgesehen ist, eignet sich besonders zur vierfachen Einfügung in den Nutzinformationsblock AU-4 des Transport-Moduls STM-1. Die vier Datenzeiger AU-31* PTR werden in der vierten Zeile (Z) des Kopfteils und in der ersten Spalte des Nutzinformationsblocks AU-4 untergebracht.

FIG 3

EP 0 379 095 A1

## Synchrones Transport-Modul STM-0

Die Erfindung bezieht sich auf ein synchrones Transport-Modul STM-0 mit neun Zeilen, mit einem aus einer ersten Spaltengruppe bestehenden Kopfteil, der in den drei ersten und fünf letzten Zeilen einen Abschnittskopf (Section Overhead) und in der vierten Zeile einen Datenzeigerabschnitt enthält, und mit einem aus einer zweiten Spaltengruppe (Administrative Unit) bestehenden Nutzinformationsblock zur Aufnahme je eines Bytes (Oktetts) pro Spalte und Zeile zur Ergänzung der Synchron-Digital-Multiplexhierarchie (SDH) gemäß den CCITT-Empfehlungen G.707, G.708 und G.709.

Die wichtigsten Digitalsignalhierarchien sind in der Zeitschrift "telcom report", 11 (1988), Heft 5, Seiten 160 bis 163 in der ersten Figur beschrieben. Die Synchron-Digital-Multiplexhierarchie (SDH) umfaßt Transport-Moduln STM-1 für 155,52 Mbit/s, Transport-Moduln STM-4 für 622,08 Mbit/s und Transport-Moduln STM-16 für 2488,32 Mbit/s. Die europäische Hierarchie für plesiochrone Digitalsignale arbeitet mit Bitraten von 2,048 Mbit/s, 8,448 Mbit/s, 34,368 Mbit/s und 139,264 Mbit/s und die nordamerikanische Hierarchie für plesiochrone Digitalsignale verwendet Bitraten von 1,544 Mbit/s, 6,312 Mbit/s und 44,736 Mbit/s.

Die Zeitschrift "ntz", 41 (1988) Heft 10, Seiten 570 -574 zeigt in Bild 3 ein synchrones Transport-Modul STM-1, in Bild 7 einen Abschnittskopf (Section Overhead) und AU-Datenzeiger (Administrativ Unit Pointers) und in Bild 8 Pfadköpfe (Path Overheads) für verschiedene virtuelle Container. Der Pfadkopf VC-31 POH umfaßt sechs Bytes. Weitere drei Bytes wie bei den Pfadköpfen VC-32 POH und VC-4 POH sind nicht vorhanden.

Das synchrone Transport-Modul STM-1 weist die eingangs beschriebene Rahmenstruktur auf. Der Rahmen enthält 2430 byte und ist mit 270 Spalten und 9 Zeilen dargestellt. Im Nutzinformationsblock AU-4 sollen vorzugsweise H4-Signale einer Bitrate von 139,264 Mbit/s übertragen werden.

Nach der US-Norm (ANSI) ist für ein Synchrones Optisches Netzwerk SONET weiter als Basis-Block ein synchrones Transport-Signal STS-1 vorgesehen, das einen Abschnittskopf (Section Overhead) von 9 Byte, einen Leitungskopf (Line Overhead) von 1 Byte, einen Nutzinformationsblock (Administrative Unit) AU-32 und einen Datenzeiger (pointer) AU-32 PTR in derselben Struktur wie der der Transport-Moduln STM-1 aufweist. Das synchrone Transport-Signal STS 1 besitzt eine Übertragungskapazität von 51,84 Mbit/s, was exakt ein Drittel der Übertragungskapazität des synchronen Transport-Moduls STM-1 ist. Dieses vermag ein H22-Signal einer Bitrate von 44,736 Mbit/s aufzunehmen.

Eine byteweise Verschachtelung von drei synchronen Transport-Signalen STS-1 ergibt ein synchrones Transport-Signal STS-3, dessen Abschnittskopf dem des synchronen Transport-Moduls STM-1 entspricht. Damit ist das synchrone Transport-Signal STS-1, das ein H22-Signal einer Bitrate von 44,736 Mbit/s aufnehmen kann, als Übertragungssystem auch nach CCITT abgedeckt.

Aufgabe der Erfindung ist es, ein synchrones Transport-Modul anzugeben, das in entsprechender Weise ein H21-Signal einer Bitrate von 34,368 Mbit/s aufzunehmen vermag.

Ausgehend von dem synchronen Transport-Modul der einleitend geschilderten ARt wird diese Aufgabe erfindungsgemäß mit den Merkmalen des Anspruchs 1 gelöst.

Eine erste Ausgestaltung des erfindungsgemäßen synchronen Transport-Moduls STM-0 enthält die Merkmale des Anspruchs 2 und eine zweite Ausgestaltung die Merkmale des Anspruchs 3. Letztere kann zusätzlich das Merkmal des Anspruchs 4 erhalten.

Eine Anwendung des erfindungsgemäßen synchronen Transport-Moduls STM-0 ist den Merkmalen des Anspruchs 5 zu entnehmen.

Anhand von Ausführungsbeispielen wird die Erfindung nachstehend näher erläutert.

Figur 1 zeigt das erfindungsgemäße synchrone Transport-Modul STM-0.

Figur 2 zeigt dieses synchrone Transport-Modul STM-0 mit einem virtuellen Container VC-31,

Figur 3 zeigt dieses synchrone Transport-Modul STM-0 mit einem Virtuellen Containern VC-31*,

Figur 4 zeigt ein synchrones Transport-Modul STM-1 mit vier virtuellen Container VC-31* und

Figur 5 zeigt die ersten Spalten des synchronen Transport-Moduls STM-1.

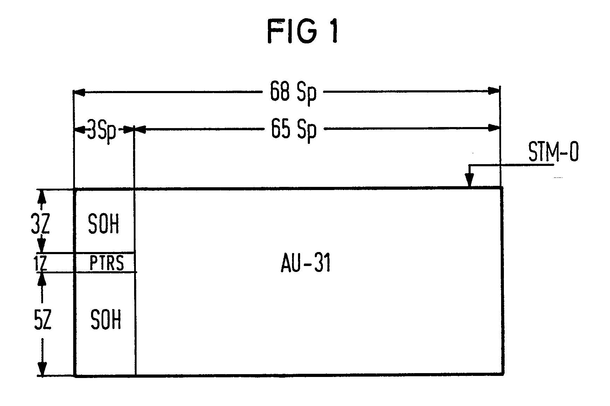

Figur 1 zeigt das erfindungsgemäße synchrone Transport-Modul STM-0. Dieses besteht aus achtundsechzig Spalten Sp und neun Zeilen Z. Die ersten drei und die letzten fünf Zeilen Z der ersten drei Spalten Sp bilden den Abschnittskopf SOH. Die vierte Zeile ist der Datenzeigerabschnitt PTRS. Die anschließenden fünfundsechzig Spalten Sp bilden über alle neun Zeilen Z den Nutzinformationsblock AU-31.

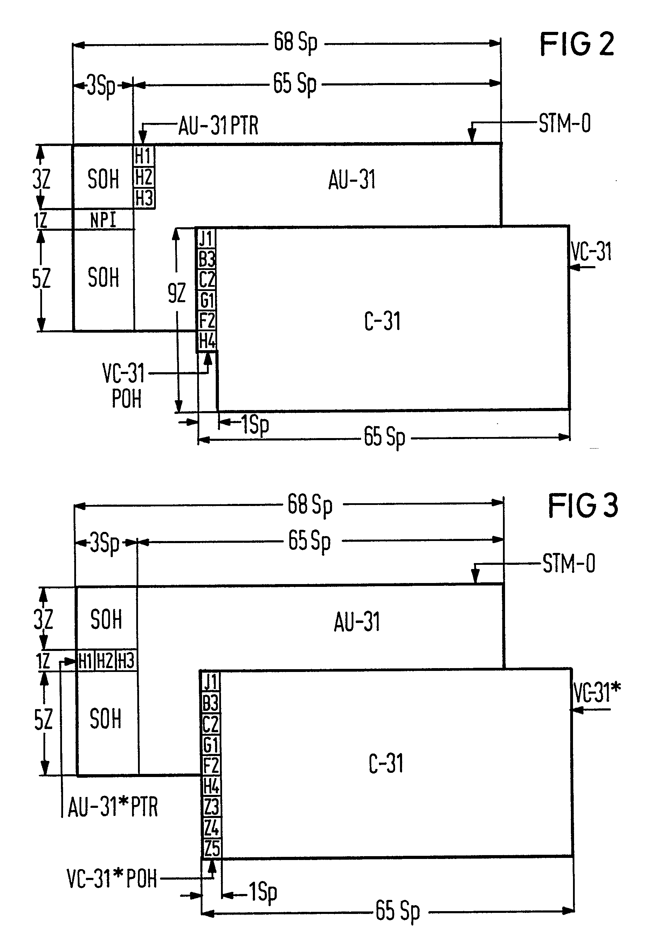

Figur 2 zeigt ebenfalls ein synchrones Transport-Modul STM-0. Im Datenzeigerabschnitt PTRS ist hier eine Anzeige NPI (Null Pointer Indication) für fehlenden Datenzeiger untergebracht.

Weiter ist ein virtueller Container VC-31 nach CCITT gezeigt, der in einer ersten Spalte über sechs Zeilen einen Pfadkopfteil VC-31 POH und anschließend einen Container C-31 mit fünfundsechzig Spalten Sp und neun Zeilen Z enthält. Die Buchstaben-Ziffer-Kombinationen im Pfadkopfteil VC-31 POH bezeichnen genormte Verwendungen.

Der zum virtuellen Container VC-31 gehörende Datenzeiger AU-31 PTR ist in den ersten drei Zeilen Z der ersten Spalte Sp des Nutzinformationsblocks AU-31 untergebracht und mit H1, H2 und H3 bezeichnet. Die Bytes H1 und H2 bezeichnen den Ort des Anfangs des virtuellen Containers VC-31. Das Byte H3 nimmt beim negativen Stopfen Informationsbits auf.

Die Variante nach Figur 2 hat zwei Nachteile:

1. Beim spaltenweisen Einfädeln von vier Nutzinformationsblöcken AU-31 in ein synchrones Transport-Modul STM-1 ist die Zuordnung der Bytes zu einzelnen Signalen mit konstantem Zeitabstand von Zeile zu Zeile nur dann gewahrt, wenn der Pfadkopf VC-31 POH in der gleichen Spalte wie der Datenzeiger AU-31 PTR angeordnet ist. In allen anderen Fällen werden die Bytes einer Container-Spalte über zwei bis drei AU-31-Spalten verteilt. Dies ergibt innerhalb eines Rahmens auch ohne Stopfvorgang zwei bis drei Taktsprünge um ein bis zwei byte, also einen Signaljitter.

2. Die bisherige Kopfeinteilung sieht keinen Netzwerkknotenkopf NOH (Network Node Overhead) vor. Hierfür wäre eine Kopf-Kapazität erforderlich, welche von Netzwerkknoten zu Netzwerkknoten durchgeschaltet wird. Diese ist vorteilhafterweise ein Teil des Pfadkopfes VC-31 POH, wie es die Variante nach Figur 3 ermöglicht.

Figur 3 zeigt nochmals das synchrone Transport-Modul STM-0, in dessen Datenzeigerabschnitt PTRS nach Figur 1 jetzt der Datenzeiger AU-31* PTR eingefügt ist. Ein virtueller Container VC-31* unterscheidet sich von dem virtuellen Container VC-31 nach Figur 2 dadurch, daß der Pfadkopf VC-31* POH 9 Byte umfaßt.

Die zusätzlichen Bytes Z3, Z4 und Z5 können einen Netzwerkknotenkopf NOH (Network Node Overhead) aufnehmen. Diese Variante weist die Nachteile nach den Punkten 1 und 2 nicht auf.

Beide virtuelle Container VC-31 und VC-31* können ein H21-Signal einer Bitrate von 34,368 Mbit/s aufnehmen.

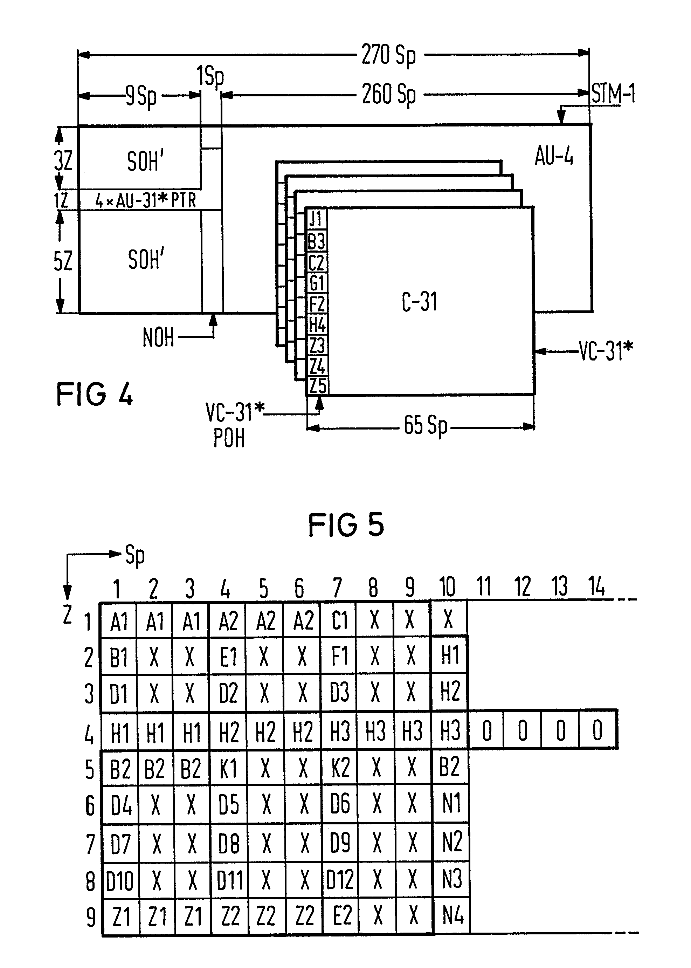

Figur 4 zeigt ein synchrones Transport-Modul STM-1 nach CCITT mit 270 Spalten Sp und 9 Zeilen Z. Es enthält einen Abschnittskopf SOH' in den drei ersten und fünf letzten Zeilen Z der ersten neun Spalten Sp. Der Nutzinformationsblock AU-4 umfaßt 261 Spalten Sp und 9 Zeilen Z. In ihn sollen vier virtuelle Container VC-31* nach Figur 3 byteweise verteilt eingefügt werden. Dazu werden die letzten 260 Spalten Sp verwendet. Die erste Spalte Sp des Nutzinformationsblocks AU-4 bleibt demnach frei. Die vier Datenzeiger AU-31* PTR für die vier virtuellen Container VC-31* werden in der vierten Zeile Z der ersten zehn Spalten Sp sowie in der zweiten und dritten Zeile Z der zehnten Spalte untergebracht. Der Rest der zehnten Spalte kann für einen Netzwerkknotenkopf NOH benützt werden.

Figur 5 zeigt die ersten vierzehn Spalten des synchronen Transport-Moduls STM-1. Die teilweise genormte Verwendung der Bytes des Abschnittskopfes SOH' ist für die Erfindung ohne Interesse. In der vierten Zeile der ersten 6 Spalten und in der dritten Zeile Z der zehnten Spalte Sp sind die vier Datenzeiger AU-31* PTR jeweils mit Bytes H1 und H2 untergebracht. Die vierte Zeile der siebenten bis zehnten Spalte Sp mit vier byte H3 bieten eine negative Stopfmöglichkeit, die vierte Zeile Z der elften bis vierzehnten Spalte Sp mit Bytes 0 ermöglicht positives Stopfen.

**Ansprüche**

1. Synchrones Transport-Modul (STM-0) mit 9 Zeilen, mit einem aus einer ersten Spaltengruppe bestehenden Kopfteil, der in den drei ersten und fünf letzten Zeilen einen Abschnittskopf (SOH) und in der vierten Zeile einen Datenzeigerabschnitt (PTR) enthält, und mit einem aus einer zweiten Spaltengruppe (AU-31) bestehenden Nutzinformationsblock zur Aufnahme je eines Bytes (Oktetts) pro Spalte und Zeile zur Ergänzung der Synchron-Digital-Multiplexhierarchie (SDH) gemäß den CCITT-Empfehlungen G.707, G.708 und G.709,
**dadurch gekennzeichnet,**
daß die erste Spaltengruppe (SOH, PTRS) aus drei Spalten besteht, daß die zweite Spaltengruppe (AU-31) aus 65 Spalten besteht und der Aufnahme eines virtuellen Containers (VC-31, VC-31*) dient und
daß eine Übertragungskapazität von 39 168 kbit/s vorgesehen ist.

2. Synchrones Transport-Modul (STM-0) nach Anspruch 1, **dadurch gekennzeichnet,**
daß ein erster virtueller Container (VC-31) nach CCITT vorgesehen ist, der eine erste Spalte mit sechs Zeilen für einen Pfadkopf (VC-31 POH) und weitere 64 Spalten mit neun Zeilen für einen Container (C-31) enthält,
daß drei Zeilen der ersten Spalte der zweiten Spaltengruppe (AU-31) der Aufnahme des Datenzeigers (AU-31 PTR) des virtuellen Containers (VC-31) dienen und
daß der Datenzeigerabschnitt (PTR) der Aufnahme einer Anzeige (NPI) für fehlenden Datenzeiger dient.

3. Synchrones Transport-Modul (STM-0) nach Anspruch 1,
**dadurch gekennzeichnet,**
daß ein zweiter virtueller Container (VC-31*) vorgesehen ist, der eine erste Spalte mit sechs Zeilen für einen Pfadkopf (VC-31 POH) sowie drei Zeilen für einen Zusatzsignalabschnitt (Z3, Z4, Z5) und weitere vierundsechzig Spalten mit neun Zeilen für einen Container (C-31) enthält, und

daß der Datenzeigerabschnitt (PTR) der Aufnahme des Datenzeigers (AU-31 PTR) des zweites virtuellen Containers (VC-31*) dient.

4. Synchrones Transport-Modul (STM-0) nach Anspruch 3,

**dadurch gekennzeichnet,**

daß mindestens eines der Zusatzsignalabschnitte (Z3, Z4, Z5) der Aufnahme eines Netzwerkknotenkopfes (NOH) dient.

5. Synchrones Transport-Modul (STM-0) nach Anspruch 3 oder 4,

**gekennzeichnet** durch eine vierfache Anwendung durch eine byteweise verschachtelte Einfügung von zweiten virtuellen Containern (VC-31*) in die zweite bis zweihunderteinundsechzigste Spalte des Nutzinformationsblocks (AU-4) eines synchronen Transport-Moduls (STM-1) der untersten Ebene der Synchron-Digital-Multiplexhierarchie (SDH) nach CCITT,

durch Einfügung der Datenzeiger (AU-31 PTR) von drei zweiten virtuellen Containern (VC-31*) in die ersten sechs Spalten der vierten Zeile des Kopfteils,

durch Einfügung des Datenzeigers (AU-31* PTR) des vierten zweiten virtuellen Containers (VC-31*) in die erste Spalte der zweiten und dritten Zeile des Nutzinformationsblocks (AU-4),

durch Verwendung der siebenten bis neunten Spalte der vierten Zeile der ersten Spaltengruppe und der ersten Spalte der vierten Zeile des Nutzinformationsblocks (AU-4) für Negativ-Stopfen und

durch Verwendung der zweiten bis fünften Spalte der vierten Zeile des Nutzinformationsblocks (AU-4) für Positiv-Stopfen.

# FIG 1

FIG 2

FIG 3

## FIG 4

## FIG 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | PROCEEDINGS OF THE IEEE GLOBAL TELECOMMUNICATIONS CONFERENCE, Tokyo, 15. - 18. November 1987, Band 1, Seiten 490-494, IEEE, New York, US; Y. INOUE et al.: "Basic considerations to define broadband network interfaces" * Seite 492, linke Spalte, Zeile 1 - Seite 494, linke Spalte, Zeile 10 * --- | 1-5 | H 04 J 3/16 |
| A | PROCEEDINGS OF THE IEEE INTERNATIONAL CONFERENCE ON COMMUNICATION, Seattle, Washington, 7. - 10. Juni 1987, Band 1, Seiten 364-369, IEEE, New York, US; S.E. MINZER: "Broadband user-network interfaces to ISDN" * Seite 365, Abschnitt 2; Seiten 368-369, Abschnitt 5 * --- | 1-5 | |
| D,A | NACHRICHTEN-TECHNISCHE ZEITSCHRIFT, N.T.Z., Band 41, Hft. 10, 1988, Seiten 570-574, Berlin, DE; W. EHRLICH et al.: "Die neue synchrone digitale Hierarchie" * Seite 571, linke Spalte, Zeile 33 - Seite 574, linke Spalte, Zeile 12 * ----- | 1-5 | RECHERCHIERTE SACHGEBIETE (Int. Cl.5) H 04 J H 04 Q |

Der vorliegende Recherchenbericht wurde für alle Patentansprüche erstellt

| Recherchenort | Abschlußdatum der Recherche | Prüfer |
|---|---|---|
| DEN HAAG | 23-04-1990 | VAN DEN BERG,J.G.J. |